# EUROPÄISCHE PATENTANMELDUNG

(11) **EP 1 658 906 A1**
(43) Veröffentlichungstag der Anmeldung: **24.05.2006**
(21) Anmeldenummer: 05025411.9
(22) Anmeldetag: 22.11.2005
(51) Int. Cl.: B09B 3/00, B03B 9/06, E03C 1/266

(54) **Verfahren und Vorrichtung zur Verarbeitung von Bioabfällen**

(30) Priorität: 22.11.2004 DE 102004056347
(71) Anmelder: Firma SBM Maschinen GmbH, 87657 Görisried (DE)
(72) Erfinder:
(74) Vertreter: Pfister, Stefan Helmut Ulrich

(57) **Zusammenfassung**

Die Erfindung betrifft ein Verfahren und eine Vorrichtung zur Verarbeitung von Bioabfällen. Es ist eine Zerkleinerungsmühle vorgesehen, hinter dieser eine Trennvorrichtung für Feststoffe und Flüssigkeiten angeordnet ist. Eine Steuerung überwacht Druck beziehungsweise Strom der von der Zerkleinerungsmühle zermahlenen Biöabfälle und regelt in Abhängigkeit diese Überwachungswerte eine der Trennvorrichtung vorgeschaltete Pumpe.

## Beschreibung

Die Erfindung betrifft ein Verfahren und eine Vorrichtung zur Verarbeitung von Bioabfällen, bestehend aus einer Zerkleinerungsmühle und einer dieser nachgeordneten Trennvorrichtung für Feststoffe und Flüssigkeiten.

Vorgenannte Vorrichtungen sind z.B. aus der deutschen Patentanmeldung 101 08 495.1 der Anmelderin bekannt. Sie werden dazu eingesetzt, organische Abfälle zu verarbeiten, wie sie in der lebensmittelverarbeitenden Industrie und in Gemeinschaftsverpflegungseinrichtungen, wie z.B. Großküchen, Kantinen oder bei Großveranstaltungen, anfallen. Insbesondere soll die Verarbeitung der Bioabfälle deren Entsorgung erleichtern.

Um diese Bioabfälle zu entsorgen, war es bekannt, diese z.B. in der Landwirtschaft als Futtermittel zu verwenden. Jedoch bedingen seuchenhygienischen Vorschriften eine entsprechend aufwendige Vorbehandlung dieser Bioabfälle.

Die organischen Abfälle beinhalten einen sehr hohen Wassergehalt von bis zu 80 %. Es handelt sich dabei oftmals um Obst- und Gemüsereste, Fisch- und Fleischabfälle, aber gegebenenfalls auch um Abfälle mit verhältnismäßig hohem Flüssigkeitsgehalt, wie Suppen, Soßen usw..

In dem Stand der Technik ist es bekannt, die Bioabfälle derart zu verarbeiten bzw. zu entsorgen, daß diese zunächst einer Zerkleinerungsmühle zugeführt werden und hernach die zermahlenen bzw. zerkleinerten Bioabfälle einer der Zerkleinerungsmühle nachgeordneten Trennvorrichtung zugeleitet wird. Die Trennvorrichtung hat dabei die Aufgabe, den Feststoffanteil aus den Bioabfällen von den Flüssigkeiten zu trennen.

Hierdurch gelingt es, Volumen und Masse der Bioabfälle erheblich zu senken und, je nach Grad der Trennung, den Feststoff in gewisser Weise auch lagerbar zu erhalten, um diesen z.B. bei der Gewinnung von Biogasen zur Verstromung einzusetzen. Durch den Flüssigkeitsentzug sinkt die Masse, gleichzeitig erfährt die Biomasse durch das Zermahlen und den Flüssigkeitsentzug eine Komprimierung.

Auf der anderen Seite ist es möglich, die Flüssigkeit z.B. direkt in den Abwasserkanal zu geben.

Mit den bekannten Vorrichtungen wird daher bereits eine kostengünstige Variante zur Verarbeitung bzw. Entsorgung der Bioabfälle eröffnet.

Für den Einsatzbereich z.B. in Verbrauchermärkten, wo in der Obst- und Gemüseabteilung unter Umständen ein erheblicher Bioabfall im Laufe eines Geschäftstages entsteht, werden Anlagen benötigt, die mit einer Leistung von bis zu einer Tonne pro Stunde Bioabfall entsorgen. Dabei ist zu beachten, daß das Abfallgut chargenweise angefördert wird und dann ein möglichst kontinuierliches Abarbeiten dieser Biomasse erfolgen soll, um die angestrebten Leistungen zu erreichen.

Ausgehend von dem Stand der Technik hat sich die vorliegende Erfindung die Aufgabe gestellt, eine möglichst kostengünstig aber auch zuverlässig funktionierende Vorrichtung zur Verfügung zu stellen.

Gelöst wird diese Aufgabe durch eine Vorrichtung zur Verarbeitung von Bioabfällen, bestehend aus einer Zerkleinerungsmühle und einer dieser nachgeordneten Trennvorrichtung für Feststoffe und Flüssigkeiten, wobei eine Steuerung Druck und/oder Strom der von der Zerkleinerungsmühle zermahlenen Bioabfälle überwacht und in Abhängigkeit dieser Überwachungswerte eine der Trennvorrichtung vorgeschaltete Pumpe regelt.

Es ist beobachtet worden, daß der von der Zerkleinerungsmühle hergestellte Bioabfallbrei in seiner Konsistenz in hohem Maße von den in die Vorrichtung eingegebenen Abfällen abhängig ist.

Für einen kontinuierlichen Prozeß, insbesondere für ein kontinuierliches Trennen ist es aber günstig, für verhältnismäßig gleiche physikalische Randbedingungen gerade in der Trennvorrichtung zu sorgen. Die Effizienz der Trennvorrichtung sinkt natürlich bei einem entsprechenden schwankenden Eingangsstrom von Abfallbrei. Wird allerdings, wie in der Erfindung vorgeschlagen, der Druck bzw. Strom des von der Zerkleinerungsmühle zermahlenen Bioabfalles überwacht und in Abhängigkeit dieser Überwachungswerte eine der Trennvorrichtung vorgeschaltete Pumpe entsprechend geregelt, so kann eine kontinuierliche Beschickung der Trennvorrichtung sichergestellt werden.

Im Ergebnis erreicht man hierdurch, daß die Trennvorrichtung möglichst kontinuierlich und gleichmäßig beschickt wird, wodurch diese möglichst an ihrem optimalen Arbeitspunkt betrieben wird. Daher ist es möglich, die Trennvorrichtung auf die tatsächlich gewünschte Abfallleistung entsprechend zu optimieren und die gesamte Vorrichtung auch kostengünstiger zu realisieren, da keine zu große Trennvorrichtung realisiert werden muß, um die gewünschte Verarbeitungsleistung zu erreichen.

Das Ganze geht dabei einher, daß eine kleine Trennvorrichtung, insbesondere im Zusammenwirken mit einer entsprechenden Zerkleinerungsmühle platzoptimiert in einem gemeinsamen Gehäuse realisierbar ist und nur die notwendigen Auffangbehälter usw. gegebenenfalls noch beigestellt werden müssen. So wird eine unter Umständen hocheffiziente, aber platzsparende Vorrichtung zur Entsorgung von Bioabfällen realisiert.

Dabei stellt die Steuerung auch die Basis für eine allgemeine Prozeßüberwachung in den erfindungsgemäßen Vorrichtungen. So erlaubt die Steuerung auch, daß der Verarbeitungs- bzw. Entsorgungsprozeß als solches eigenständig abläuft und die entsprechend vorgehaltenten, chargenweise angelieferten Bioabfälle Zug um Zug abgearbeitet werden. Ergibt es sich nämlich, daß gewisse Parameter, z.B. trotz Erhöhung der Pumpleistung der Pumpe nicht erreicht werden, so kann die gesamte Anordnung zu Sicherheitszwecken auf Störung gestellt und abgeschaltet werden.

Für die Überwachung von Druck bzw. Strom sind geeignete Druck- bzw. Stromsensoren vorgesehen. Diese befinden sich günstigerweise z.B. in der Zuleitung zur Trennvorrichtung oder in der Trennvorrichtung selbst. Als Strom wird in diesem Zusammenhang der Volumen- oder Massenstrom von Bioabfall beziehungsweise Bioabfallbrei verstanden, der eine definierten Querschnittsfläche passiert.

In einer erfindungsgemäßen Variante wird vorgeschlagen, daß eine Zeitmessung für die Stromüberwachung vorgesehen ist. Eine solche Variante ist insbesondere dann einsetzbar, wenn mit verhältnismäßig homogenen Bioabfall zu rechnen ist. Der aus dem homogenen Bioabfall resultierende Abfallbrei ist ebenfalls verhältnismäßig gleichbleibend, also homogen und seine Dichte bekannt. Solange nun ein entsprechender Brei fließt, kann durch eine Messung der Zeit zum Beispiel periodisch auf die Pumpe eingewirkt werden, um für eine gleichbleibende Beschickung der Trennvorrichtung zu sorgen.

Des Weiteren ist vorgesehen, daß ein Beladungssensor zur Erkennung der Anwesenheit von Bioabfall in der Vorrichtung vorgesehen ist. Der Beladungssensor ist zum Beispiel im Auflagebereich oder vor beziehungsweise nach der Zerkleinerungsmühle vorgesehen und gibt der Steuerung eine entsprechende Information, ob zu verarbeitendes Abfallgut vorhanden ist. Dabei kann insbesondere der Beladungssensor zusammen mit der Steuerung in geschickter Weise auf die Pumpe einwirken, wenn sich nämlich ergibt, daß kein Bioabfall mehr nachgefördert wird, wird es für die Pumpe schwierig sein, einen entsprechenden Strom oder Druck aufrecht zu erhalten. Eine entsprechende Logik ist in der Steuerung vorgesehen.

In einer bevorzugten Variante der Erfindung ist vorgesehen, daß die Steuerung auf ein Flüssigkeitsventil wirkt und gegebenenfalls den Bioabfällen Wasser bzw. Flüssigkeit zumischbar ist.

Es ist z.B. gefunden worden, daß die Pumpfähigkeit des zu Abfallbrei zermahlenen Bioabfällen erheblich von dem Feuchtigkeitsgrad abhängig ist. Werden nun z.B. verhältnismäßig trockene Bioabfälle in die Vorrichtung gegeben, so kann sich das Problem ergeben, daß dies eine nur sehr schwierig pumpbare Masse ergibt und in einem solchen Fall natürlich der zu überwachende Strom oder Druck abfällt. In einem solchen Fall ist z.B. in der Steuerung vorgesehen, gegebenenfalls zugleich oder nachdem der entsprechende Feuchtigkeitssensor die Feuchtigkeit des Bioabfalles ermittelt hat, dem Bioabfall entsprechend Wasser oder Flüssigkeit zuzumischen. Hierzu wirkt dann die Steuerung auf ein entsprechendes Mischventil. Durch das Beimengen von Flüssigkeit wird die Pumpfähigkeit des Abfallbreis entsprechend günstig beeinflusst und ein störungsfreier Betrieb sichergestellt.

In einer erfindungsgemäßen Variante ist dabei auch vorgesehen, daß dem Bioabfall, in Abhängigkeit der Betriebsdauer der Zerkleinerungsmühle, Flüssigkeit zugemischt wird. Eine solche Verfahrensweise ist insbesondere bei möglichst homogenen Bioabfällen einsetzbar. Die Homogenität bezieht sich dabei insbesondere auf den Feuchtigkeitsgehalt des zu verarbeitenden Abfalls. Ist dieser bekannt, so ist es möglich, entsprechend Flüssigkeit dosiert zuzumischen, um eine optimale Konsistenz zu erreichen. Eine Überdosierung würde den Trennaufwand nur über Gebühr erhöhen. Sind aber entsprechende, optimale Werte bekannt, ist es möglich, das Mischventil entsprechend zu öffnen und, bezogen auf die Abfallmenge, das heißt, auf die Masse, das Gewicht oder das Volumen, einen entsprechenden Flüssigkeitsanteil kontinuierlich oder diskontinuierlich beizumischen. Dies wird geschickterweise auf die Betriebsdauer der Zerkleinerungsmühle bezogen, da logischerweise, so lange die Zerkleinerungsmühle läuft, auch entsprechender Bioabfall zu verarbeiten ist.

Der Betrieb der Zerkleinerungsmühle steht dabei zum Beispiel in Abhängigkeit von einem Beladungssensor, der dann die Zerkleinerungsmühle abstellt, wenn kein Bioabfall mehr vorgehalten ist. Wird die Zerkleinerungsmühle angehalten, so ist es auch nicht mehr notwendig, Flüssigkeit beizumengen, das Mischventil würde geschlossen werden.

Dabei läßt es sich die Erfindung offen, ob während der gesamten Betriebsdauer der Zerkleinerungsmühle Flüssigkeit zugemischt wird, oder nur in entsprechenden Anteilen. Die Beimischung ist dabei auch zwischen verschiedenen, möglichst homogenen Abfallarten (durch die Steuerung) variierbar, derart, daß trockenerem Abfallgut eine erste Ventilstellung zugeordnet ist, die einen größeren Flüssigkeitstrom freigibt und einem nasseren Abfallgut eine zweite Ventilstellung zugeordnet ist, die eine geringere Flüssigkeitsmenge beimengt. Günstigerweise wird diese im Bereich vor der Zerkleinerungsmühle oder in dieser, vor dem eigentlichen Mahlprozeß, beigemengt, um durch die mit dem Mahlen einhergehende Durchmischung einen möglichst homogenen Abfallbrei für die Trennvorrichtung zu erzeugen.

Gemäß der Erfindung ist dabei vorgesehen, daß entweder Wasser oder Flüssigkeit einsetzbar ist. Zum Beispiel ist es möglich, die aus der Trennvorrichtung gewonnene Flüssigkeit so in einem Kreislauf wieder der Anfeuchtung der Bioabfälle zuzuführen und somit zu verwenden und Frischwasser zu sparen. Natürlich ist auch der Einsatz von Frischwasser möglich.

Des weiteren ist vorgesehen, daß die zu verarbeitenden beziehungsweise zu entsorgenden Bioabfälle in einem Auflagebereich einbringbar sind und die Steuerung mit Abfallerkennungssensoren im Auflagebereich in Wirkverbindung steht, um insbesondere in dem Bioabfall enthaltenen Störabfall zu erkennen. Für die Mechanik der Vorrichtung gefährliche Metallteile und dergleichen gelten als Störabfall und müssen sicher aus dem zu entsorgenden Bioabfall vor dessen Verarbeitung mit der erfindungsgemäßen Vorrichtung heraussortiert werden. Es werden daher im Auflagebereich entsprechende Abfallerkennungssensoren eingesetzt, die auf typischen physikalischen Effekten beruhen. Signalisiert ein entsprechender Abfallerkennungssensor die Anwesenheit eines Störabfalls, so ist die Steuerung in der Lage, den Verarbeitungsprozeß entsprechend zu unterbrechen und z.B. eine Störsequenz zu durchlaufen und z.B. die Bedienperson in geeigneter Weise aufmerksam zu machen (Licht- oder Tonsignal), um die Störung zu beseitigen.

Soweit im Rahmen dieser Anmeldung auch von einer Entsorgung des Bioabfalls gesprochen wird, ist die Entsorgung als eine mögliche Variante der Verarbeitung des Bioabfalles zu verstehen. Die Erfindung stellt insbesondere darauf ab, den anfallenden Bioabfall wieder derart aufzubereiten oder zu verarbeiten, um insbesondere dessen Weiternutzung oder auch Entsorgung zu erleichtern. Insofern dient diese Vorrichtung auch in einem Spezialfall der Entsorgung der Bioabfälle, ist hierauf aber nicht beschränkt.

Das Einbringen von Flüssigkeit bzw. Wasser in den Bioabfall ist gemäß der Erfindung sowohl vor wie auch nach der Zerkleinerungsmühle möglich.

Erfindungsgemäß ist vorgesehen, daß der Trennvorrichtung nachgeordnet je ein Auffangbehälter für Feststoff und/oder Flüssigkeit vorgesehen ist, und die Steuerung mit Füllstandsensoren in den Auffangbehältern in Wirkverbindung steht. Die Erfindung legt sich nicht darauf fest, daß sowohl ein Auffangbehälter für Feststoff wie auch ein Auffangbehälter für Flüssigkeiten zwingend vorgesehen ist. Es kann auch nur ein Auffangbehälter vorgesehen sein, und z.B. die Flüssigkeit direkt in den Kanal entsorgt wird. Für einen möglichst automatischen Betrieb ist es günstig, daß die Steuerung auch über den Füllstand den jeweilig vorhandenen Auffangbehälter Kenntnis hat, wozu entsprechende Füllstandsensoren eingesetzt werden. Wird von nur einem dieser Sensoren angezeigt, daß ein Auffangbehälter ein bedrohliches Niveau erreicht hat, so kann über die Steuerung z.B. die Zuförderung von neuem Abfallbrei durch die Pumpe gedrosselt oder unterbunden werden oder aber z.B. die Auflagebereiche entsprechend geschlossen werden. Auch in diesem Fall würde dann ein Störfall resultieren, wobei dann die Bedienperson aufzufordern wäre, die Auffangbehälter zu entleeren. Im Ergebnis sieht die Erfindung also vor, daß die Steuerung in Abhängigkeit der von dem Abfallerkennungssensor bzw. Füllstandsensor übermittelten Information die Verarbeitungsleistung der gesamten Vorrichtung bzw. nur der Trennvorrichtung oder anderer Teile regelt, drosselt oder anhält bzw. eine Störsequenz einleitet.

Auch ist es ungünstig, wenn z.B. Kunststoff in die Vorrichtung gelangt, da Kunststoff im Verarbeitungs- bzw. Entsorgungsprozeß hernach stört. Auch ist es möglich, den Abfallerkennungssensor derart auszugestalten, daß die Qualität des eingebrachten Bioabfalles überwacht wird. Hierbei sind z.B. entsprechende Feuchtigkeitssensoren oder auch Leitfähigkeitssensoren denkbar, durch die auf die jeweilige Qualität des aufgelegten Bioabfalles zurückgeschlossen werden kann.

In der Auslegung der Steuerung wird bei einer Störsequenz z.B. die Zerkleinerungsmühle gestoppt und die Pumpe fördert noch vorhandene bereits zerkleinerte Biomasse zur Trennvorrichtung. Die Störsequenz entleert also die Vorrichtung, um z.B. eine Wartung oder Reinigung zu erleichtern. Gegebenenfalls kann aber auch anstelle einer Störsequenz eine Notfallsequenz ausgelöst werden, wodurch z.B. ein Notstop generiert wird.

Da, wie eingangs beschrieben, ein erheblicher Anteil der anfallenden Biomasse Flüssigkeit ist, und die Flüssigkeit z.B. zum Anfeuchten der Biomasse bzw. der zerkleinerten Biomasse im Kreislauf eingesetzt wird, ist es günstig, eine Flüssigkeitaufbereitung für die Flüssigkeit vorzusehen. Dies insbesondere deswegen, weil bei der Verwendung einer biologischen Wasseraufbereitung, die aus der Flüssigkeit ausgefällten Stoffe in der erfindungsgemäßen Bioabfallbearbeitungsvorrichtung eingesetzt werden können und zum anderen entsprechend vorgereinigtes Wasser die Abwasserkanäle entsprechend entlastet.

Es ist gefunden worden, daß es günstig ist, daß die Steuerung die Pumprate der Pumpe regelt. Die Pumpe wird z.B. derart betrieben, daß ein Zeitintervall in eine Pumprate und eine Pause unterteilt ist.

Dieses Zeitintervall wird beliebig oft wiederholt. Wird nun von der Steuerung bemerkt, daß der Strom unterhalb den gewünschten Werten zurückbleibt, so wird die Pumprate entsprechend erhöht, der Pausenanteil entsprechend gesenkt. Es stellt sich dann ein Steuer-Regel-Kreis ein, mit dem Ziel, die gewünschten Werte von Strom bzw. Druck zu erreichen.

Der Einsatz einer Steuerung bietet des weiteren den Vorteil, daß Start- und Abstellsequenzen in der Steuerung abrufbar sind und bei der Startsequenz insbesondere zunächst die Zerkleinerungsmühle, hernach die Pumpe und am Ende die Trennvorrichtung gestartet wird und in der Abstellsequenz einen Nachlauf der Trennvorrichtung bezüglich des Laufes der Zerkleinerungsmühle durchführt. Bei einer solchen Ausgestaltung wird zum einen Energie gespart, da beim Startprozeß nicht gleichzeitig alle Elemente laufen müssen, wenn auch nicht in allen Elementen entsprechendes zu verarbeitendes Gut vorgehalten ist. Gegebenenfalls werden die einzelnen Elemente nach fest vorgegebenen Zeitabständen gestartet oder aber es sind entsprechende Erkennungssensoren vorhanden, die der Steuerung mitteilen, daß z.B. die Pumpe bzw. die Trennvorrichtung zu starten ist.

Neben einer Energieeinsparung wird dadurch aber auch ein Schutz der Vorrichtung selber erreicht, da vermieden wird, daß die Anordnung trocken läuft.

Günstigerweise ist eine Spülsequenz in der Steuerung vorgesehen, bei welcher die gesamte Vorrichtung mit Frischwasser spülbar ist. Dabei ist vorgesehen, daß dem Frischwasser entsprechende Reinigungs- oder auch Desinfektionsmittel zugesetzt sind, um eine entsprechende Spülung bzw. Reinigung oder auch Desinfektion der gesamten Vorrichtung zu erreichen. Dies ist insbesondere aus hygienischen Aspekten empfehlenswert und erleichtert erheblich die Reinigung der erfindungsgemäßen Vorrichtung. Die Steuerung wirkt dabei in geeigneter Weise auf die Ventile zur Zuleitung des Frischwassers, auch die Zugabe der Reinigungs- oder Desinfektionsmittel ist durch die Steuerung entsprechend beherrschbar.

Ein wesentlicher Vorteil der Erfindung liegt auch darin, daß eine Reinigungssequenz der Trennvorrichtung vorgesehen ist, die von der Steuerung z.B. im laufenden Betrieb, insbesondere für Wartungszwecke oder auch in der Spül- oder Abstellsequenz einsetzbar ist. Da bei einer Trennvorrichtung aus dem Abfallbrei die Flüssigkeit und der Feststoff getrennt wird, ist es günstig, für einen reibungslosen Betrieb der Trennvorrichtung eine regelmäßige Reinigungssequenz nur für die Trennvorrichtung vorzusehen, und so einer ansonsten fälligen Wartung oder Instandsetzung zuvorzukommen. Dabei wird die Reinigungsequenz z.B. für Wartungszwecke automatisch, z.B. in Abhängigkeit der Betriebszeit oder der Verarbeitungsmenge, durchgeführt. Sie beinhaltet dabei einen eigenen Reinigungsprozeß, der nur auf die Trennvorrichtung gerichtet ist, wobei die Reinigungssequenz auch als Teil der Spülsequenz oder am Ende der Abstellsequenz durchzuführen ist.

Der Vorteil der Erfindung liegt insbesondere darin, daß die vorgenannten Sequenzen modulartig ausgebildet sind und durch die Steuerung bei Bedarf einsetzbar und abrufbar sind.

Natürlich ist es auch möglich, für die Zerkleinerungsmühle eine entsprechende Reinigungssequenz einzurichten.

Für den Fall, daß von der Steuerung z.B. durch die Abfallerkennungssensoren oder die Füllstandsensoren ein Störfall ermittelt wird, ist es möglich und auch günstig, daß die Steuerung eine Störsequenz einleitet, bei welcher die Steuerung die Zerkleinerungsmühle stoppt und die Pumpe noch vorhandene zerkleinerte Bioabfallbrei zur Trennvorrichtung fördert, die Trennvorrichtung dieses noch entsprechend trennt und hernach die Steuerung gegebenenfalls eine Reinigungssequenz durchführt. Für den Fall, daß die Füllstandsensoren auf eine Störung hinweisen, muß natürlich entsprechende Reserve vorgesehen sein, um auch eine vollständige Entleerung der Vorrichtung zu erlauben. Mit einem Stoppen der Zerkleinerungsmühle ist der Nachschub an Abfallbrei unterbrochen, für den Fall, daß entsprechende Fremdkörper oder Störabfälle im Auflagebereich aufgefunden werden, wird durch das frühzeitige Anhalten der Zerkleinerungsmühle diese geschützt.

Vorteilhafterweise ist die Pumpe als Impellerpumpe ausgebildet. Impellerpumpen haben den Vorteil, daß sie lageunempfindlich ausgebildet sind und trocken, selbstansaugend sind. Sie können daher auch im entleerten Zustand die gesamte Vorrichtung zum Einsatz bringen.

Die Erfindung bezieht sich auch auf ein Verfahren zur Verarbeitung von Bioabfällen, wobei die Bioabfälle in einer Zerkleinerungsmühle zerkleinert bzw. zermahlen werden und eine nachgeordnete Trennvorrichtung die zerkleinerten Bioabfälle in Feststoff und Flüssigkeiten trennt, wobei Druck und/oder Strom der zermahlenen Bioabfälle überwacht wird und gegebenenfalls der Druck bzw. Strom der zermahlenen Bioabfälle durch eine Pumpe geregelt, insbesondere erhöht oder abgesenkt wird. Bei einer solchen erfindungsgemäßen Verfahrensweise wird der sichere, störungsfreie und auch automatische Betrieb sichergestellt und eine konstante Auslastung der Trennvorrichtung erreicht, wodurch diese in letzter Konsequenz nicht überdimensioniert werden muß, um entsprechende Bearbeitungsspitzen sicher abzufangen.

In diesem Zusammenhang wird insbesondere darauf hingewiesen, daß alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

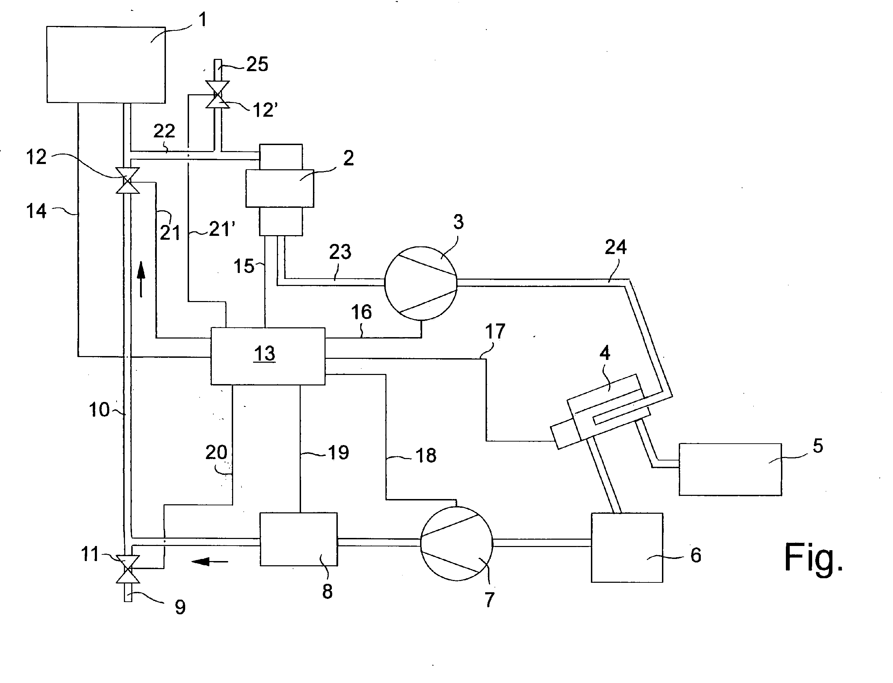

In der einzigen Zeichnung ist die Erfindung in einem Blockschaltbild schematisch dargestellt.

Die erfindungsgemäße Vorrichtung ist wie folgt zu beschreiben. Im Auflagebereich 1 wird der Bioabfall aufgelegt. Er gelangt durch die als Leitung 22 dargestellte Verbindung in die Zerkleinerungsmühle 2. Die Zerkleinerungsmühle 2 erzeugt einen Abfallbrei, dessen Pump- beziehungsweise Fließfähigkeit im Wesentlichen davon abhängig ist, wie groß der Wasseranteil des eingegebenen Gutes ist.

Die Förderrichtung des Bioabfalles, der Flüssigkeit und so weiter ist jeweils mit Pfeilen angegeben.

Der in der Zerkleinerungsmühle 2 erzeugte Abfallbrei wird durch die Saugleitung 23, durch die Pumpe 3 und eine Pumpleitung 24 in die Trennvorrichtung 4 gefördert. Die Trennvorrichtung 4 bewirkt ein Trennen der in dem Abfallbrei beinhalteten Feststoffen von den Flüssigkeiten. Für die Feststoffe steht der Auffangbehälter 5 zur Verfügung. Auch für die Flüssigkeiten ist ein Auffangbehälter mit der Bezugsziffer 6 vorgesehen.

Die Trennvorrichtung 4 ist zum Beispiel als Presse oder dergleichen ausgebildet.

Die in dem Auffangbehälter 6 aufgefangene Flüssigkeit wird gegebenenfalls über eine Flüssigkeitspumpe 7 in eine Flüssigkeitsaufbereitung 8 geleitet und kann dann über das Abwasserventil 11 zum Beispiel in den Abwasserkanal 9 abgelassen werden. Das Abwasserventil 11 wird über die Steuerleitung 20 mit der Steuerung verbunden.

Natürlich ist es möglich, auf die Anordnung einer Flüssigkeitspumpe 7 und einer Flüssigkeitsaufbereitung 8 zu verzichten und die Flüssigkeit ausgangsseitig an der Trennvorrichtung 4 direkt in den Abwasserkanal 9 einzuleiten.

Gemäß der Erfindung ist gefunden worden, daß es günstig ist, einen möglichst kontinuierlichen Förderstrom zu der Trennvorrichtung 4 sicherzustellen. Da das Weiterfördern des aus der Zerkleinerungsmühle 2 austretenden Abfallbreis nicht überwacht oder kontrolliert wird sondern zum Beispiel der Schwerkraft oder der Pumpleistung der Zerkleinerungsmühle 2 überlassen blieb, wird nunmehr durch die Erfindung vorgeschlagen, in dem Bereich zwischen der Zerkleinerungsmühle 2 und der Trennvorrichtung 4 eine Pumpe 3 anzuordnen und die Pumpe 3 durch die Steuerung 13 so zu regeln, daß ein möglichst optimales Zuförderverhalten von zu trennendem Abfallbrei an die Trennvorrichtung 4 sichergestellt ist.

Hierzu ist zum Beispiel eine Sensorleitung 17 vorgesehen, über die die physikalischen Parameter Druck und/oder Strom (hier ist der Volumen- oder Massestrom des Abfallbreis gemeint) gemessen und über die Leitung 17 an die Steuerung 13 übermittelt wird. Aufgrund der durch entsprechende Sensoren ermittelten Parameter und der in der Steuerung 13 vorgegebenen Kriterien, ist es nun möglich, die Pumpe 3 entsprechend zu regeln und ein optimales Zuförderverhalten zu der Trennvorrichtung 4 einzustellen.

Hierzu ist die Pumpe 3 über die Steuerleitung 16 mit der Steuerung 13 verbunden.

Die Leitung 17 erlaubt gleichzeitig aber auch die Trennleistung der Trennvorrichtung 4 durch die Steuerung 13 zu steuern. Hieraus eröffnen sich weitere Möglichkeiten durch den Einsatz der Steuerung. Es ist zum Beispiel möglich, entsprechende Anfahr- oder Abstellsequenzen oder auch Störsequenzen und Notfälle und so weiter mit der Steuerung zu beherrschen und kontrolliert durchzuführen.

Insbesondere ist gefunden worden, daß, falls zu trockenes Abfallgut eingegeben wird, der Bioabfall mit Flüssigkeit oder Wasser vermischt wird. So ist zum Beispiel ein erstes Mischventil 12 vorgesehen, welches erlaubt, aus der Flüssigkeitszuleitung 10 Flüssigkeit in den Zulauf 22, zwischen Auflagebereich 1 und Zerkleinerungsmühle 2 einzubringen.

Gleiches ist zum Beispiel auch mit dem zweiten Zumischventil 12' möglich, über welches Frischwasser über die Frischwasserleitung 25 eingespeist werden kann. Hierzu ist die Steuerung 13 mit einer entsprechenden Steuerleitung 21, 21' ausgestattet, durch die die Steuerung 13 die Mischventile 12, 12' zu steuern und zu regeln vermag. Dies kann zum Beispiel auch für Reinigungsprozesse verwendet werden.

Es ist dabei gemäß der Erfindung gleichwertig, ob Zuflußleitungen für die Flüssigkeiten beziehungsweise das Frischwasser wie angedeutet ausgebildet sind oder aber diese bereits in dem Auflagebereich 1 einmünden, diesen also gegebenenfalls mitbenetzen oder reinigen oder erst in der Zerkleinerungsmühle 2 münden. Dabei ist zu beachten, daß das Zusetzen von Wasser beziehungsweise Flüssigkeit vor der Zerkleinerungsmühle 2 insbesondere einen zusätzlichen Durchmischungseffekt gibt und zu einem homogeneren und dabei leichter pumpbaren Abfallbrei nach der Zerkleinerungsmühle 2 führt. Es ist aber auch möglich, das Wasser beziehungsweise die Flüssigkeit nach der Zerkleinerungsmühle 2 anzuordnen.

Günstigerweise ist eine Sensorleitung 14 vorgesehen, die die Steuerung 13 mit Abfallerkennungssensoren im Auflagebereich 1 verbindet. Je nachdem, welche Abfallart beziehungsweise Abfallqualität hier ermittelt wird, können durch die Steuerung entsprechende Bearbeitungsszenarien vorbereitet und eingeleitet werden oder aber im Fall, daß Störabfälle aufgefunden werden, entsprechende Stör- oder Notfallsequenzen oder Programme ausgelöst werden. In einem solchen Fall werden dann die Zerkleinerungsmühle 2 über die Steuerleitung 15, die Pumpe 3 über die Steuerleitung 16 und die Trennvorrichtung 4 über die Sensor-Steuerleitung 17 entsprechend geregelt oder sogar gestoppt beziehungsweise kontrolliert angehalten oder heruntergefahren.

Zur Komplettierung ist vorgesehen, daß auch die Flüssigkeitspumpe 7 sowie die Flüssigkeitsaufbereitung 8 über entsprechende Steuerleitungen 18, 19 mit der Steuerung 13 verbunden sind und auch so die Steuerung gegebenenfalls auf diese Elemente Einfluß nehmen kann.

Auch das Abwasserventil 11, welches den Flüssigkeitskreislauf mit der Kanalisation 9 verbindet, ist durch die Steuerung 13 steuer- und regelbar.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung zur Verarbeitung von Bioabfällen, bestehend aus einer Zerkleinerungsmühle und einer, dieser nachgeordneten Trennvorrichtung für Feststoffe und Flüssigkeiten, **dadurch gekennzeichnet, daß** eine Steuerung (13) Druck und/oder Strom der von der Zerkleinerungsmühle (2) zermahlenen Bioabfälle überwacht und in Abhängigkeit dieser Überwachungswerte eine der Trennvorrichtung (4) vorgeschaltete Pumpe (3) regelt.

2. Vorrichtung nach Anspruch 1, **dadurch gekennzeichnet, daß** der Druck und/oder der Strom in der Zuleitung (24) zur Trennvorrichtung (4) oder in der Trennvorrichtung (4) überwacht wird und/oder die Steuerung (13) auf ein Flüssigkeitsventil (12, 12') wirkt und gegebenenfalls den Bioabfällen Wasser bzw. Flüssigkeit zumischbar ist.

3. Vorrichtung nach einem oder beiden der vorhergehenden Ansprüche, **gekennzeichnet durch** eine Zeitmessung der Stromüberwachung und/oder einen Beladesensor zur Erkennung des Vorhandenseins von Bioabfall in der Vorrichtung.

4. Vorrichtung nach einem oder mehreren der vorhergehenden Ansprüche, **dadurch gekennzeichnet, daß** dem Bioabfall in Abhängigkeit der Betriebsdauer der Zerkleinerungsmühle (2) Flüssigkeit zugemischt wird und/oder die zu entsorgenden Bioabfälle in einem Auflagebereich (1) einbringbar sind und die Steuerung (13) mit mindestens einem Abfallerkennungssensor im Auflagebereich (1) in Wirkverbindung steht, um insbesondere in dem Bioabfall enthaltenen Störabfall zu erkennen.

5. Vorrichtung nach einem oder mehreren der vorhergehenden Ansprüche, **dadurch gekennzeichnet, daß** der Trennvorrichtung (4) nachgeordnet je ein Auffangbehälter (5, 6) für Feststoff und/oder Flüssigkeit vorgesehen ist und die Steuerung (13) mit Füllstandsensoren in den Auffangbehältern (5, 6) in Wirkverbindung steht und/oder die Steuerung (13) in Abhängigkeit der von dem Abfallerkennungssenor bzw. Füllstandsensor übermittelte Informationen, die Verarbeitungsleistung der gesamten Vorrichtung bzw. der Trennvorrichtung (4) regelt, drosselt oder anhält bzw. eine Störsequenz einleitet.

6. Vorrichtung nach einem oder mehreren der vorhergehenden Ansprüche, **gekennzeichnet durch** eine Flüssigkeitsaufbereitung (8) der Flüssigkeit und/oder ein Frischwasserzulauf (25) vorgesehen ist und/oder die Steuerung (13) die Pumprate der Pumpe (3) regelt und/oder die Pumpe (3) als Impellerpumpe ausgebildet ist.

7. Vorrichtung nach einem oder mehreren der vorhergehenden Ansprüche, **dadurch gekennzeichnet, daß** in der Steuerung (13) Start- und Abstellsequenzen abrufbar sind und die Steuerung (13) bei der Startsequenz zunächst die Zerkleinerungsmühle, hernach die Pumpe und am Ende die Trennvorrichtung startet und in der Abstellsequenz einen Nachlauf der Trennvorrichtung (4) bezüglich des Laufes der Zerkleinerungsmühle (2) durchführt.

8. Vorrichtung nach einem oder mehreren der vorhergehenden Ansprüche, **gekennzeichnet durch** eine Spülsequenz in der Steuerung (13), bei welcher die gesamte Vorrichtung mit Frischwasser spülbar ist und/oder **gekennzeichnet durch** eine Reinigungssequenz der Trennvorrichtung (4), die von der Steuerung (13), z.B. im laufenden Betrieb, insbesondere für Wartungszwecke oder in der Spül- oder Abstellsequenz einsetzbar ist.

9. Vorrichtung nach einem oder mehreren der vorhergehenden Ansprüche, **dadurch gekennzeichnet, daß** in einer Störsequenz die Steuerung (13) die Zerkleinerungsmühle (2) stoppt und die Pumpe (3) noch vorhandene zerkleinerte Biomasse zur Trennvorrichtung (4) fördert und hernach die Steuerung (13) gegebenenfalls eine Reinigunssequenz durchführt.

10. Verfahren zur Verarbeitung von Bioabfällen, wobei die Bioabfälle in einer Zerkleinerungsmühle zerkleinert bzw. zermahlen werden und eine nachgeordnete Trennvorrichtung die zerkleinerten Bioabfälle in Feststoff und Flüssigkeiten trennt, wobei Druck und/oder Strom der zermahlenen Bioabfälle überwacht wird und gegebenenfalls der Druck bzw. der Strom der zermahlenen Bioabfälle durch eine Pumpe geregelt, insbesondere erhöht oder abgesenkt wird.
